# EUROPEAN PATENT APPLICATION

(11) **EP 4 678 135 A1**
(43) Date of publication of application: **14.01.2026**
(21) Application number: 23927630.6
(22) Date of filing: 18.12.2023
(51) Int. Cl.: A61C 3/08

(54) **PASTE SYRINGE**

(30) Priority: 10.03.2023 JP 2023038037
(71) Applicant: Tokuyama Dental Corporation, Tokyo 110-0016 (JP)
(72) Inventor: MACHIDA, Yuki, Tokyo 110-0016 (JP); MATSUO, Takuma, Tokyo 110-0016 (JP)
(74) Representative: Kraus & Lederer PartGmbB
(86) International application number: PCT/JP2023/045181
(87) International publication number: WO 2024/190027

(57) **Abstract**

The present invention provides a paste syringe that is designed to release, as much as possible, internal pressure generated inside a syringe body when a paste is subjected to pressure, thereby avoiding paste solidification or liquid seepage due to residual pressure, and accordingly avoiding difficulty in forward movement of an extrusion member. The paste syringe includes a syringe body, a nut member, a screw member, an extrusion member, and a closure member. The syringe body has a cylindrical inner periphery and includes a main section in which a paste is stored. The nut member is located at a base end of the main section of the syringe body such that the nut member and the main section are concentric, and has a cylindrical inner periphery on which a female thread is formed. The screw member includes a male thread section with a male thread formed on its cylindrical outer periphery, and an operation section located at the rear of the male thread section, and is allowed to move forward within the main section of the syringe body while being rotated in a direction of forward movement with the male thread being screwed into the female thread of the nut member. The extrusion member is located at a tip of the screw member. The closure member is detachably attached to a tip part of the syringe body to close a discharge orifice of the syringe body. The extrusion member includes a disc-shaped portion with an outer diameter corresponding to an inner diameter of the main section of the syringe body, and has a residual pressure-release space is provided behind the disc-shaped portion, and the disc-shaped portion includes at least one through hole that communicates with the residual pressure-release space.

## Description

### Technical Field:

The present invention relates to a paste syringe for use with a paste such as a photopolymerizable composite resin for dental material and, more particularly, to a paste syringe that includes a syringe body including a main section in which the paste is stored, a screw member that is allowed to move forward within the syringe body while being rotated in a predetermined direction, an extrusion member combined with a tip part of the screw member, and a closure member that is detachably attached to a tip part of the syringe body to close a discharge orifice of the syringe body.

### Background Art:

Patent Documents 1 and 2 below disclose a paste syringe for use with a paste, such as a photopolymerizable composite resin for dental material, that includes a syringe body, a nut member, a screw member, an extrusion member, and a closure member. The syringe body has a cylindrical inner periphery and includes a main section in which the paste is stored. The nut member is located at the base end of the main section of the syringe body such that the nut member and the main section are concentric, and has a cylindrical inner periphery on which a female thread is formed. The screw member includes a male thread section with a male thread formed on its cylindrical outer periphery, and an operation section located at the rear of the male thread section. The screw member is allowed to move forward within the main section of the syringe body while being rotated in the direction of forward movement with its male thread being screwed into the female thread of the nut member. The extrusion member is located at the tip of the screw member, and is allowed to move forward within the main section of the syringe body along with the screw member moving forward, thereby extruding the paste stored in the main section through a discharge orifice of the syringe body. The closure member is detachably attached to a tip part of the syringe body to close the discharge orifice of the syringe body.

### Prior Art Documents:

### Patent Documents:

Patent Document 1: JP-A-2010-11907
Patent Document 2: JP-A-2010-162111

### Summary of the Invention:

### Problems to be solved by the Invention:

However, the present inventors have found through experience that the conventional paste syringe as described above has the following problems that need to be solved. When the screw member is rotated in the direction of forward movement, allowing the extrusion member to move forward, so as to discharge the paste through the discharge orifice of the syringe body, the paste is subjected to pressure, followed by generation of internal pressure inside the syringe body. The thus-generated internal pressure remains after the paste discharging operation has been stopped. As the paste discharging operation is repeated at intervals over time, the paste present at the tip part of the syringe body is gradually discharged through the discharge orifice; however, the paste located especially at a rear part of the syringe body, i.e., in a place adjacent to the front surface of the extrusion member, is subjected to repeated pressure, resulting in accumulation of residual pressure. The thus-accumulated residual pressure causes the paste component to be separated, so that the paste is solidified, or liquid seeps out of the paste. Further, the paste solidified in the place adjacent to the front surface of the extrusion member tends to make it difficult for the screw member to rotate in the direction of forward movement and for the extrusion member to move forward.

The present invention has been made in view of the aforementioned fact, and a primary technical object of the invention is to provide a novel and improved paste syringe that is designed to release, as much as possible, internal pressure generated inside the syringe body when the paste is subjected to pressure, thereby avoiding paste solidification or liquid seepage due to residual pressure, and accordingly avoiding difficulty in allowing the extrusion member to move forward, or in other words, difficulty in discharging the paste.

### Means for solving the Problems:

As a result of intensive studies and experiments, the present inventors have found that the above-described primary technical object can be achieved by: ensuring a residual pressure-release space behind a disc-shaped portion of an extrusion member; in an embodiment having the disc-shaped portion with outer diameter corresponding to the inner diameter of a syringe body; and providing the disc-shaped portion of the extrusion member with at least one through hole that communicates with the residual pressure-release space.

To achieve the above-described primary technical object, the present invention provides:
A paste syringe including a syringe body, a nut member, a screw member, an extrusion member, and a closure member,
the syringe body having a cylindrical inner periphery and including a main section in which a paste is stored,
the nut member being located at a base end of the main section of the syringe body such that the nut member and the main section are concentric, the nut member having a cylindrical inner periphery on which a female thread is formed,
the screw member including a male thread section with a male thread formed on its cylindrical outer periphery, and an operation section located at the rear end of the male thread section, the screw member being allowed to move forward within the main section of the syringe body while being rotated in a direction of forward movement with the male thread being screwed into the female thread of the nut member,
the extrusion member being located at a tip of the screw member, and
the closure member being detachably attached to a tip part of the syringe body to close a discharge orifice of the syringe body, wherein
the extrusion member includes a disc-shaped portion with an outer diameter corresponding to an inner diameter of the main section of the syringe body, and ensures a residual pressure-release space behind the disc-shaped portion, and the disc-shaped portion includes at least one through hole that communicates with the residual pressure-release space.

Preferably, the residual pressure-release space is defined around a tip section of the screw member behind the disc-shaped portion of the extrusion member, and the through hole of the disc-shaped portion of the extrusion member comprises a plurality of through holes that are formed circumferentially at intervals. In this case, it is suitable that the tip section of the screw member protrudes from the male thread section and has an outer diameter smaller than an outer diameter of the male thread section. It is also preferable that the tip section of the screw member includes, in a central region of a tip surface of the screw member, an open hole that defines the residual pressure-release space, and the through hole of the disc-shaped portion of the extrusion member comprises a single through hole that is formed in a central region of the disc-shaped portion. The extrusion member suitably includes a cylindrical portion that extends backward from a peripheral edge of a back surface of the disc-shaped portion and surrounds the tip section of the screw member. Desirably, the through hole has a total cross-sectional area that is 3% to 10% of an area of a front surface of the disc-shaped portion, and the through hole is circular in cross-section with a diameter of 1 mm or more. It is suitable that the syringe body has, in its base end part, a cylindrical outer periphery on which a connecting male thread is formed; the nut member is formed separately from the main section of the syringe body and has, in addition to the cylindrical inner periphery on which the female thread is formed, an additional cylindrical inner periphery on which a connecting female thread is formed; and the connecting female thread of the nut member is screwed onto the connecting male thread in the main section of the syringe body, whereby the nut member is attached to the syringe body. The paste stored in the main section of the syringe body is suitably a photopolymerizable composite resin for dental material.

### Effects of the Invention:

According to the paste syringe of the present invention, the pressure generated on the paste located adjacent to the front surface of the extrusion member is released into the residual pressure-release space present behind the disc-shaped portion through the through hole formed in the disc-shaped portion of the extrusion member, whereby internal pressure generated inside the syringe body when the paste is subjected to pressure is released as much as possible. Thus, it is possible to avoid paste solidification or liquid seepage due to residual pressure, and accordingly to avoid difficulty in allowing the extrusion member to move forward, or in other words, difficulty in discharging the paste.

### Brief Description of the Drawings:

[Figure 1]: a front view showing a paste syringe in a preferred embodiment constructed in accordance with the present invention;
[Figure 2]: a cross-sectional view of the paste syringe shown in Figure 1 taken along the line II-II in Figure 1;
[Figure 3]: a side view showing an extrusion member of the paste syringe shown in Figure 2; and
[Figure 4]: a partial cross-sectional view showing a modification of a tip section of a screw member and the extrusion member.

### Mode for Carrying out the Invention:

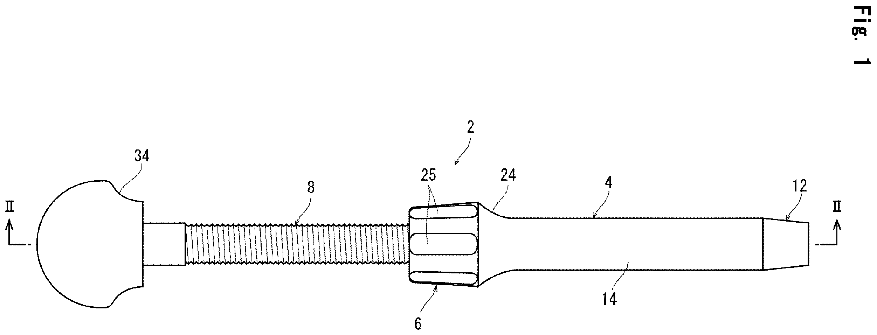

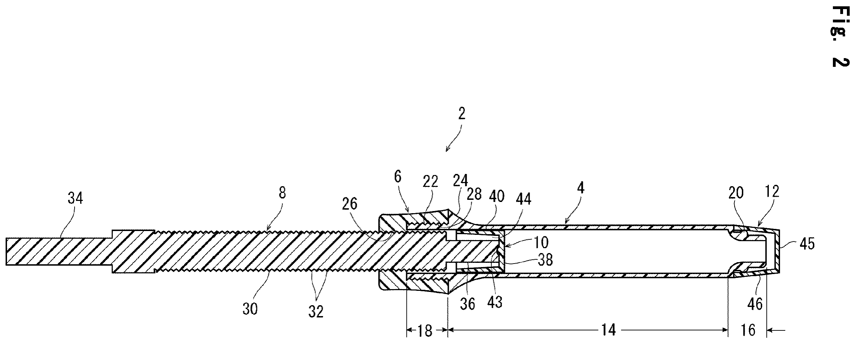

Hereinafter, preferred embodiments of a paste syringe constructed in accordance with the present invention will be described in further detail with reference to the accompanying drawings. Note that the line II-II extends vertically in Figures 1 and 2; however, the following description is given on the assumption that it extends horizontally, with the upper (lower) side in the drawings being regarded as the right (left) side.

Referring to Figures 1 and 2, a paste syringe constructed in accordance with the present invention, which is denoted as a whole by reference numeral 2, includes a syringe body 4, a nut member 6, a screw member 8, an extrusion member 10, and a closure member 12. In the illustrated embodiment, the syringe body 4, the nut member 6, the screw member 8, the extrusion member 10, and the closure member 12 are made separately of an appropriate synthetic resin such as polypropylene or polyethylene. In a case where a paste to be stored in the syringe body 4 is, for example, a light-cured composite resin dental material (i.e., a composite resin that contains a photopolymerization initiator to be cured by light irradiation), it is desirable that the syringe body 4, the nut member 6, the screw member 8, the extrusion member 10, and the closure member 12, especially the syringe body 4 and the closure member 12, are appropriately colored in black or the like so as to have light proofing property.

The syringe body 4 shown in the drawings includes a main section 14 having cylindrical inner and outer peripheries, a nozzle section 16 provided in a tip part (or a right end part in Figures 1 and 2) thereof, and an additional section 18 provided in a base end part (or a left end part in Figures 1 and 2) thereof. The nozzle section 16 extends from the main section 14 such that they are concentric, and includes a rear end part with a cylindrical tapered circular truncated cone shape and a tip part with a small-diameter cylindrical shape. In a boundary region between the rear end part and the tip part on the outer periphery, an annular locking ridge 20 is formed. On the outer periphery of the additional section 18, which has the same center and substantially the same inner and outer diameters as the main section 14, a connecting male thread 22 is formed. In a boundary region between the main section 14 and the additional section 18 on the outer periphery, an annular flange 24 is formed. The annular flange 24 is such that one surface (or the left surface in Figure 2) extends substantially perpendicularly to the central axis line of the syringe body 4 and the other surface (or the right surface in Figure 2) has an approximately circular truncated cone shape that gradually decreases in outer diameter toward the front.

The nut member 6 has a pipe shape and includes a plurality of (e.g., six in the illustrated case) recesses 25 formed circumferentially at intervals on its outer periphery. The outer periphery of the nut member 6 has a cylindrical circular truncated cone shape whose outer diameter gradually decreases toward the left in Figures 1 and 2. The inner periphery of the nut member 6 includes a first inner periphery that has a cylindrical shape with a relatively small diameter and a second inner periphery that has a cylindrical shape with a relatively large diameter. A female thread 26 is formed on the first inner periphery, and a connecting female thread 28 is formed on the second inner periphery. As will be clearly understood from Figure 2, the nut member 6 with this structure is attached to the syringe body 4 with the connecting female thread 28 of the nut member 6 being screwed onto the connecting male thread 22 formed in the additional section 18 of the syringe body 4. It is suitable that the maximum outer diameter of the nut member 6 (i.e., the outer diameter at the right end in Figures 1 and 2) is substantially the same as the maximum outer diameter of the annular flange 24 (i.e., the outer diameter at the left end in Figures 1 and 2) of the syringe body 4. If desired, the syringe body 4 and the nut member 6 can be formed integrally with each other.

Still referring to Figures 1 and 2, the screw member 8 shown in the drawings includes a thread section 30 that is columnar in shape with a male thread 32 formed on its outer periphery, an operation section 34 provided at the rear of the thread section 30, and a tip section 36 provided at the tip of the thread section 30. The operation section 34 includes a columnar connecting portion that is continuous with the thread section 30, and a flat-plate gripper that is continuous with the columnar portion. The tip section 36 has a columnar shape with an outer diameter smaller than the outer diameter of the thread section 30 and is located such that the tip section 36 and the thread section 30 are concentric. If desired, the tip section 36 can have any appropriate shape suitable for defining a residual pressure-release space (to be described later) therearound, such as a two-stage columnar shape with a cylindrical front part having a small diameter and a rear part having an outer diameter larger than the outer diameter of the front part but smaller than the outer diameter of the thread section 30, or a circular truncated cone shape that gradually decreases in outer diameter toward the tip. The screw member 8 is allowed to proceed into the main section 14 of the syringe body 4 while being rotated in the direction of forward movement (or clockwise viewed from the left in Figure 2) with the male thread 32 formed in the thread section 30 being screwed into the female thread 26 formed in the nut member 6.

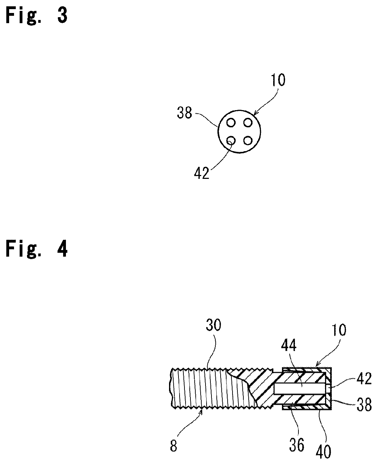

Still referring to Figure 2 and also to Figure 3, the extrusion member 10 shown in the drawings includes a disc-shaped portion 38 and a cylindrical portion 40 that extends backward (or to the left in Figure 2) from the outer peripheral edge of the back surface (or the left surface in Figure 2) of the disc-shaped portion 38. It is important that the disc-shaped portion 38 has an outer diameter that corresponds to the inner diameter of the main section 14 of the syringe body 4 or, more particularly, is substantially the same as or smaller by approximately 0.1 to 0.3 mm than the inner diameter of the main section 14. It is also important that the disc-shaped portion 38 has a plurality of, preferably approximately three to six, (e.g., four in the illustrated case) through holes 42 that are formed circumferentially at appropriate intervals, preferably at equal angular intervals. The total cross-sectional area of the through holes 42 is preferably approximately 3% to 10% of the area of the front surface of the disc-shaped portion 38. As will be understood from Examples to be described later, if the total cross-sectional area of the through holes 42 is too small, the residual pressure on the paste (not shown) stored in the main section 14 of the syringe body 4, especially on the paste located adjacent to the front surface of the extrusion member 10, tends to be insufficiently released. If the total cross-sectional area of the through holes 42 is too large, an excessive amount of paste tends to flow backward (or to the left in Figure 2) through the through holes 42 of the extrusion member 10, leading to a huge loss of paste. Each of the through holes 42 is suitably circular in cross-section with a diameter of 1 mm or more. As will be understood from a Comparative Example to be described later, if the diameter is smaller than 1 mm, the residual pressure on the paste stored in the main section 14 of the syringe body 4, especially on the paste located adjacent to the front surface of the extrusion member 10, tends to be released insufficiently. As shown in Figure 2, the extrusion member 10 is fitted over the tip section 36 of the screw member 8 such that the cylindrical portion 40 of the extrusion member 10 surrounds the tip section 36 of the screw member 8. Behind (or on the left in Figure 2 of) the disc-shaped portion 38 of the extrusion member 10 or, more particularly, between the inner periphery of the cylindrical portion 40 of the extrusion member 10 and the outer periphery of the tip section 36 of the screw member 8, a residual pressure-release space 44 is defined. In a central part of the back surface of the disc-shaped portion 38 of the extrusion member 10, a relatively small projection 43 is formed, which abuts the tip surface of the screw member 8. If desired, the extrusion member 10 can be formed integrally with the screw member 8.

Referring to Figures 1 and 2, the closure member 12 shown in the drawings has a so-called cap shape with a disc-shaped top wall 45 and a side wall 46 that extends from the peripheral edge of the top wall 45 and forms as a whole a cylindrical circular truncated cone shape. The entire outer periphery of the side wall 46 has a cylindrical circular truncated cone shape, and the inner periphery of the side wall 46 also has a cylindrical circular truncated cone shape except for an open end part (or a left end part in Figure 2), while the open end part of the inner periphery has a cylindrical shape. The closure member 12 with this structure is detachably fitted over the nozzle section 16 of the syringe body 4 to close a discharge orifice provided at the tip of the nozzle section 16. When the closure member 12 is fitted over the nozzle section 16, the open end part on the inner periphery of the closure member 12 is engaged with the annular locking ridge 20 provided on the outer periphery of the nozzle section 16, whereby the closure member 12 is locked to the nozzle section 16. The open end part on the inner periphery of the closure member 12 suitably has a vent groove (not shown) or a plurality of vent grooves provided circumferentially at intervals so that air is let out when the closure member 12 is fitted over the nozzle section 16 (see Patent Document 2 above for the structure of the vent groove(s)).

Next, a description will be given of how the above-described paste syringe 2 is used. The main section 14 of the syringe body 4 stores the paste (not shown), such as a light-cured composite resin dental material having a viscosity of approximately 10 to 10⁷ Pa·S as measured with a dynamic viscoelasticity measuring instrument. To discharge a required amount of paste for use, the closure member 12 is removed from the nozzle section 16 of the syringe body 4 so that the discharge orifice formed at the tip of the nozzle section 16 is opened. Then, the screw member 8 is rotated in the direction of forward movement (i.e., clockwise viewed from the left in Figures 1 and 2) so that it moves forward or to the right in Figures 1 and 2, with the operation section 34 held. As the screw member 8 moves forward, the extrusion member 10 is also allowed to move forward, applying extrusion pressure to the paste, whereby the paste is extruded through the nozzle section 16. Once the required amount paste has been extruded, the screw member 8 is stopped from rotating, and the closure member 12 is attached to the nozzle section 16 to close the orifice. This operation may be repeated as necessary for appropriate use of the paste. Through repetition of this operation, the paste is subjected to repeated pressure, resulting in generation of internal pressure. In view of this, the paste syringe 2 constructed in accordance with the present invention is designed to release the pressure generated on the paste into the residual pressure-release space 44 through the through holes 42 formed in the disc-shaped portion 38 of the extrusion member 10. Thus, it is prevented that the residual pressure from causing the paste components to separate, solidify, or cause liquid to seep out of the paste, and also prevents the paste from becoming difficult to rotate the screw member 8 and difficult to discharge due to the solidified paste. Accordingly, it is possible to avoid difficulty in rotating the screw member 8 and discharging the paste caused by paste solidification. When the residual pressure on the paste is released, a slight amount of paste flows into the residual pressure-release space 44 through the through holes 42 formed in the extrusion member 10.

Figure 4 shows modifications of the tip section 36 of the screw member 8 and the extrusion member 10. The tip section 36 of the screw member 8 shown in Figure 4 has a columnar shape with an outer diameter somewhat smaller than the outer diameter of the thread section 30 or, more particularly, smaller than the minor diameter of the thread section 30 by the dimension corresponding to twice the thickness of the cylindrical portion 40 of the extrusion member 10. The tip section 36 includes, in a central region of its tip surface, an open hole that defines the residual pressure-release space 44. The hole defining the residual pressure-release space 44 may be circular or polygonal in cross-section. If desired, the hole defining the residual pressure-release space 44 can extend to the inside of the thread section 30. The extrusion member 10 shown in Figure 4 has the same structure as the extrusion member 10 in the embodiments shown in Figures 1 to 3, except that the disc-shaped portion 38 has the single through hole 42 without having the projection 43 in its central region. The through hole 42 communicates with the residual pressure-release space 44 defined in the tip section 36 of the screw member 8. As in the embodiment shown in Figures 1 to 3, the through hole 42 preferably has a cross-sectional area that is approximately 3% to 10% of the area of the front surface of the disc-shaped portion 38 and is preferably circular in cross-section with a diameter of 1 mm or more. The hole defining the residual pressure-release space 44 formed in the tip section 36 of the screw member 8 has a diameter sufficiently larger than, suitably approximately twice as large as, the diameter of the thorough hole 42.

Next, a description will be given of Examples and a Comparative Example.

### Examples:

### Example 1

The paste syringe in the embodiment shown in Figures 1 to 3 was produced. The syringe body, the screw member, and the extrusion member were made of polypropylene. The main section of the syringe body had a length in the axial direction of 67.0 mm and an inner diameter of 8.2 mm; the extrusion member had a length in the axial direction of 8.5 mm with the disc-shaped portion having a diameter of 8.0 mm; and the tip section of the screw member had a length in the axial direction of 10.0 mm and an outer diameter of 6.0 mm. The disc-shaped portion of the extrusion member had two through holes formed circumferentially at angular intervals of 180°. Table 1 below shows the diameter of each of the through holes and the total cross-sectional area of the through holes expressed in percentage relative to the area of the disc-shaped portion.

The syringe as described above was used with a paste, which was a light-cured composite resin dental material (viscosity: 2200 Pa·S) available from Tokuyama Dental Corporation under the trade name of "ESTELITE ASTERIA". The syringe body was filled with 4.3 g of the paste. Then, the syringe was examined in terms of paste maintainability and stability, paste extrudability, and paste loss amount, which were determined as described below.

Maintainability and stability:
The syringes were stored in a temperature-controlled room at 23°C. For each of the syringes, the closure member was removed from the nozzle section of the syringe body, and the screw member was rotated so that 0.1 g of the paste was discharged, followed by attaching the closure member to the nozzle section. This operation was repeated every four days. On the 15th day, the first syringe (from which a total of 0.5 g of the paste had been discharged on 5 occasions) was cut at the syringe body. On the 30th day, the second syringe (from which a total of 1.0 g of the paste had been discharged on 10 occasions) was cut at the syringe body. On the 60th day, the third syringe (from which a total of 2.0 g of the paste had been discharged on 20 occasions) was cut at the syringe body. For each of the syringes, the remaining paste located adjacent to the front surface of the extrusion member was extracted for comparison with unused paste in terms of hardness. The results are shown in Table 1. The symbols in Table 1 represent the following meanings: ∘ represents "Equal in properties to unused paste"; Δ represents "Somewhat changed in properties from unused paste but practically acceptable"; and × represents "Significantly changed in properties from unused paste and unusable".

Paste extrudability:
The extrudability of the paste when being extruded from the nozzle section of the syringe body by rotating the extrusion member was compared with that of unused paste. The results are shown in Table 1. The symbols in Table 1 represent the following meanings: ⊚ represents "Same extrudability as unused paste until the last"; ∘ represents "It felt somewhat heavier than unused paste but was practically acceptable"; Δ represents "It felt heavier with resistance than unused paste"; and × represents "It felt so heavy that it was unable to be discharged".

Paste loss amount:
The amount of paste that had flown into the residual pressure-release space through the through holes formed in the disc-shaped portion of the extrusion member was measured. The results are shown in Table 1. The symbols in Table 1 represent the following meanings: ⊚ represents "Less than 5%"; ∘ represents "Less than 10%"; Δ represents "Less than 15%"; and × represents "Not less than 15%".

### Example 2

A syringe was produced in the same manner as in Example 1, except that the disc-shaped portion of the extrusion member had four through holes formed circumferentially at angular intervals of 90° such that the diameter of each of the through holes and the total cross-sectional area of the through holes expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Example 3

A syringe was produced in the same manner as in Example 1, except that the disc-shaped portion of the extrusion member had six through holes formed circumferentially at angular intervals of 60° such that the diameter of each of the through holes and the total cross-sectional area of the through holes expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Example 4

A syringe was produced in the same manner as in Example 1, except that the tip section of the screw member and the extrusion member had the configuration shown in Figure 4. Herein, the hole formed in the tip section of the screw member had a length in the axial direction of 30.0 mm and an inner diameter of 3.0 mm, and the disc-shaped portion of the extrusion member had a single through hole in its center that was formed such that the diameter of the through hole and the total cross-sectional area of the through hole expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Example 5

A syringe was produced in the same manner as in Example 4, except that the diameter of the through hole and the total cross-sectional area of the through hole expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Example 6

A syringe was produced in the same manner as in Example 4, except that the diameter of the through hole and the total cross-sectional area of the through hole expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Example 7

A syringe was produced in the same manner as in Example 3, except that the diameter of each of the through holes and the total cross-sectional area of the through holes expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Example 8

A syringe was produced in the same manner as in Example 3, except that the diameter of each of the through holes and the total cross-sectional area of the through holes expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Example 9

A syringe was produced in the same manner as in Example 1, except that the diameter of each of the through holes and the total cross-sectional area of the through holes expressed in percentage relative to the area of the disc-shaped portion were as shown in Table 1. The thus-produced syringe was examined in terms of paste maintainability and stability, paste extrudability, and paste loss amount as in Example 1. The results are shown in Table 1.

### Comparative Example 1

A syringe was produced in the same manner as in Example 1, except that the disc-shaped portion of the extrusion member had no through hole. The thus-produced syringe was examined in terms of paste maintainability and stability, paste extrudability, and paste loss amount as in Example 1. The results are shown in Table 1.

**[Table 1]**

| | Through hole | | | Maintainability and stability (day) | | | | Extrudability | Paste loss |
|---|---|---|---|---|---|---|---|---|---|
| | Number | Φ (mm) | Area% of hole relative to surface | 0 | 15 | 30 | 60 | | |
| Example 1 | 2 | 1 | 3.1 | ○ | ○ | ○ | Δ | ○ | ⊚ |
| Example 2 | 4 | 1 | 6.3 | ○ | ○ | ○ | ○ | ⊚ | ⊚ |
| Example 3 | 6 | 1 | 9.4 | ○ | ○ | ○ | ○ | ⊚ | ○ |
| Example 4 | 1 | 1.5 | 3.5 | ○ | ○ | ○ | Δ | ○ | ⊚ |
| Example 5 | 1 | 2.5 | 9.8 | ○ | ○ | ○ | ○ | ⊚ | ○ |
| Example 6 | 1 | 1 | 1.6 | ○ | ○ | Δ | Δ | Δ | ⊚ |
| Example 7 | 6 | 0.5 | 2.3 | ○ | ○ | Δ | Δ | Δ | ⊚ |
| Example 8 | 6 | 1.5 | 21.1 | ○ | ○ | ○ | ○ | ⊚ | × |
| Example 9 | 2 | 2 | 12.5 | ○ | ○ | ○ | ○ | ⊚ | Δ |
| Comparative Example 1 | 0 | - | - | ○ | Δ | × | × | × | ⊚ |

### Explanations of Letters or Numerals:

- 2:: Paste syringe
- 4:: Syringe body
- 6:: Nut member
- 8:: Screw member
- 10:: Extrusion member
- 12:: Closure member
- 14:: Main section of syringe body
- 16:: Nozzle section
- 18:: Additional section of syringe body
- 20:: Annular locking ridge
- 22:: Connecting male thread
- 24:: Annular flange
- 25:: Recess
- 26:: Female thread
- 28:: Connecting female thread
- 30:: Thread section
- 32:: Male thread
- 34:: Operation section
- 36:: Tip section
- 38:: Disc-shaped portion
- 40:: Cylindrical portion
- 42:: Through hole
- 43:: Projection
- 44:: Residual pressure-release space
- 45:: Top wall
- 46:: Side wall

## Claims

1. A paste syringe comprising a syringe body, a nut member, a screw member, an extrusion member, and a closure member,
the syringe body having a cylindrical inner periphery and including a main section in which a paste is stored,
the nut member being located at a base end of the main section of the syringe body such that the nut member and the main section are concentric, the nut member having a cylindrical inner periphery on which a female thread is formed,
the screw member including a male thread section with a male thread formed on its cylindrical outer periphery, and an operation section located at the rear end of the male thread section, the screw member being allowed to move forward within the main section of the syringe body while being rotated in a direction of forward movement with the male thread being screwed into the female thread of the nut member,
the extrusion member being located at a tip of the screw member, and
the closure member being detachably attached to a tip part of the syringe body to close a discharge orifice of the syringe body, wherein
the extrusion member includes a disc-shaped portion with an outer diameter corresponding to an inner diameter of the main section of the syringe body, and ensures a residual pressure-release space behind the disc-shaped portion, and the disc-shaped portion includes at least one through hole that communicates with the residual pressure-release space.

2. The paste syringe according to claim 1, wherein the residual pressure-release space is defined around a tip section of the screw member behind the disc-shaped portion of the extrusion member, and the through hole of the disc-shaped portion of the extrusion member comprises a plurality of through holes that are formed circumferentially at intervals.

3. The paste syringe according to claim 2, wherein the tip section of the screw member protrudes from the male thread section and has an outer diameter smaller than an outer diameter of the male thread section.

4. The paste syringe according to claim 1, wherein the tip section of the screw member includes, in a central region of a tip surface of the screw member, an open hole that defines the residual pressure-release space, and the through hole of the disc-shaped portion of the extrusion member comprises a single through hole that is formed in a central region of the disc-shaped portion.

5. The paste syringe according to any one of claims 2 to 4, wherein the extrusion member includes a cylindrical portion that extends backward from a peripheral edge of a back surface of the disc-shaped portion and surrounds the tip section of the screw member.

6. The paste syringe according to claim 1, wherein the through hole has a total cross-sectional area that is 3% to 10% of an area of a front surface of the disc-shaped portion.

7. The paste syringe according to claim 1 or 6, wherein the through hole is circular in cross-section with a diameter of 1 mm or more.

8. The paste syringe according to claim 1, wherein the syringe body has, in its base end part, a cylindrical outer periphery on which a connecting male thread is formed; the nut member is formed separately from the main section of the syringe body and has, in addition to the cylindrical inner periphery on which the female thread is formed, an additional cylindrical inner periphery on which a connecting female thread is formed; and the connecting female thread of the nut member is screwed onto the connecting male thread in the main section of the syringe body, whereby the nut member is attached to the syringe body.

9. The paste syringe according to claim 1, wherein the paste stored in the main section of the syringe body is a photopolymerizable composite resin for dental material.

## Amended claims

### Amended claims under Art. 19.1 PCT

1. A paste syringe comprising a syringe body, a nut member, a screw member, an extrusion member, and a closure member,
the syringe body having a cylindrical inner periphery and including a main section in which a paste is stored,
the nut member being located at a base end of the main section of the syringe body such that the nut member and the main section are concentric, the nut member having a cylindrical inner periphery on which a female thread is formed,
the screw member including a male thread section with a male thread formed on its cylindrical outer periphery, and an operation section located at the rear end of the male thread section, the screw member being allowed to move forward within the main section of the syringe body while being rotated in a direction of forward movement with the male thread being screwed into the female thread of the nut member,
the extrusion member being located at a tip of the screw member, and
the closure member being detachably attached to a tip part of the syringe body to close a discharge orifice of the syringe body, wherein
the extrusion member includes a disc-shaped portion with an outer diameter corresponding to an inner diameter of the main section of the syringe body; a tip section of the screw member located behind the disc-shaped portion includes, in a central region of a tip surface of the screw member, an open hole that defines a residual pressure-release space; and the disc-shaped portion includes in its central region at least one through hole that communicates with the residual pressure-release space.

3. The paste syringe according to claim 1, wherein the tip section of the screw member protrudes from the male thread section and has an outer diameter smaller than an outer diameter of the male thread section.

4. The paste syringe according to claim 1, wherein the through hole comprises a single through hole.

5. The paste syringe according to claim 1, 3 or 4, wherein the extrusion member includes a cylindrical portion that extends backward from a peripheral edge of a back surface of the disc-shaped portion and surrounds the tip section of the screw member.

6. The paste syringe according to claim 1, wherein the through hole has a total cross-sectional area that is 3% to 10% of an area of a front surface of the disc-shaped portion.

7. The paste syringe according to claim 1, 3, 4, 5 or 6, wherein the through hole is circular in cross-section with a diameter of 1 mm or more.

8. The paste syringe according to claim 1, wherein the syringe body has, in its base end part, a cylindrical outer periphery on which a connecting male thread is formed; the nut member is formed separately from the main section of the syringe body and has, in addition to the cylindrical inner periphery on which the female thread is formed, an additional cylindrical inner periphery on which a connecting female thread is formed; and the connecting female thread of the nut member is screwed onto the connecting male thread in the main section of the syringe body, whereby the nut member is attached to the syringe body.

9. The paste syringe according to claim 1, wherein the paste stored in the main section of the syringe body is a photopolymerizable composite resin for dental material.

Statement under Art. 19.1 PCT
Claim 1 is amended at lines 17 to 19 pf the original Japanese Claims, corresponding to lines 29 to 33 of the English translation of Claims, to recite that "a tip section of the screw member located behind the disc-shaped portion includes, in a central region of a tip surface of the screw member, an open hole that defines a residual pressure-release space; and the disc-shaped portion includes in its central region at least one through hole that communicates with the residual pressure-release space". The basis for the underlined amendment can be found in original claim 4.

The amendment of claims 3, 5 and 7 is to correct the dependency in line with the amendment of claim 1 and the cancellation of claim 2.

The amendment of claim 4 is based on original claim 4.
